# EUROPEAN PATENT APPLICATION

(11) **EP 4 807 765 A1**
(43) Date of publication of application: **16.09.2026**
(21) Application number: 24888617.8
(22) Date of filing: 30.10.2024
(51) Int. Cl.: G21K 1/06, B23B 5/00, B24B 29/02, G21K 1/00

(54) **NEUTRON CONVERGENCE DEVICE AND METHOD FOR MANUFACTURING SAME**

(30) Priority: 07.11.2023 JP 2023190128
(71) Applicant: RIKEN, Wako-shi, Saitama 351-0198 (JP); KYOTO UNIVERSITY, Kyoto 606-8501 (JP)
(72) Inventor: HOSOBATA, Takuya, Wako-shi, Saitama 351-0198 (JP); TAKEDA, Masahiro, Wako-shi, Saitama 351-0198 (JP); YAMAGATA, Yutaka, Wako-shi, Saitama 351-0198 (JP); HINO, Masahiro, Kyoto-shi, Kyoto 606-8501 (JP)
(74) Representative: Novagraaf International SA
(86) International application number: PCT/JP2024/038746
(87) International publication number: WO 2025/100320

(57) **Abstract**

A neutron convergence device includes a plurality of units configured by being connected in an axial direction, and a neutron supermirror having a predetermined surface of revolution shape. Each of the plurality of units includes a plurality of mirror segments each of which includes a mirror portion forming a portion of the neutron supermirror having the predetermined surface of revolution shape, a vacuum chamber, and a connection flange to which the plurality of mirror segments and the vacuum chamber are to be attached. Each of the plurality of mirror segments has a flange portion provided at one end thereof, and the vacuum chamber has a first flange portion provided at one end thereof and a second flange portion provided at another end thereof.

## Description

### [Technical Field]

The present invention relates to a neutron convergence device and a method for manufacturing the same.

### [Background Art]

A neutron convergence device reflects/converges a low-energy neutron beam to be used for material structure analysis to dramatically increase the efficiency of a neutron scattering experiment. The neutron convergence device is implemented by depositing a metal multilayer film, referred to as a neutron supermirror, on a precision-machined curved substrate. The present inventors have developed a technology of implementing neutron convergence devices of various shapes by using a substrate obtained by coating an easily machinable metal with nickel-phosphorus plating (NPL 1 to NPL 4).

### [Citation List]

### [Patent Literature]

[PTL 1] Japanese Patent Application Publication No. 2011-247825

### [Non Patent Literatures]

[NPL 1] Takeda, Shin, et al. "Development of a large plano-elliptical neutron-focusing supermirror with metallic substrates." Optics express 24. 12 (2016): 12478-12488.
[NPL 2] Hosobata, Takuya, et al. "Development of precision elliptic neutron-focusing supermirror." Optics express 25. 17 (2017): 20012-20024.
[NPL 3] Hosobata, Takuya, et al. "Elliptic neutron-focusing supermirror for illuminating small samples in neutron reflectometry." Optics Express 27. 19 (2019): 26807-26820.
[NPL 4] Yamada, Norifumi L., et al. "Application of precise neutron focusing mirrors for neutron reflectometry: latest results and future prospects." Journal of Applied Crystallography 53.6 (2020): 1462-1470.

### [Summary of Invention]

### [Technical Problem]

In order to manufacture a neutron supermirror having a rotationally symmetric shape, such as that of an ellipsoid of revolution or a paraboloid of revolution, it is necessary to machine an inner surface of the rotationally symmetric shape into a precision curved surface, and deposit a metal multilayer film. In the conventional technology, the rotationally symmetric shape is divided into a plurality of segments in a circumferential direction and an axial direction, an inner surface of each of the segments is machined into a precision curved surface, either individually or in the plurality of segments in the axial direction, a film deposition process is performed on the inner surface, and then the segments are assembled to be integrated.

Thus, in a method according to the conventional technology, it takes an enormous amount of time to manufacture the neutron convergence device. Therefore, the present invention proposes a neutron convergence device and a method for manufacturing the same that allow mass manufacturing in a shorter time than in the conventional technology.

### [Solution To Problem]

A first aspect of the present invention is a neutron convergence device including: a plurality of units configured by being connected in an axial direction; and a neutron supermirror having a predetermined surface of revolution shape, wherein each of the plurality of units includes: a plurality of mirror segments which are separate in a circumferential direction and each of which includes a mirror portion forming a portion of the neutron supermirror having the predetermined surface of revolution shape; a vacuum chamber for containing the plurality of mirror segments; and a connection flange to which the plurality of mirror segments and the vacuum chamber are to be attached, wherein each of the plurality of mirror segments has a flange portion provided at one end thereof, wherein the vacuum chamber has a first flange portion provided at one end thereof and a second flange portion provided at another end thereof, and wherein the connection flange has a first attachment portion provided to attach the flange portion of each of the plurality of mirror segments in the same unit as that of the connection flange and a second attachment portion located on an outer periphery of the first attachment portion and provided to attach the first flange portion of the vacuum chamber in the same unit as that of the connection flange.

In the present aspect, it may also be possible that the connection flange has a third attachment portion provided to attach the second flange portion of the vacuum chamber in the unit different from that of the connection flange.

In the present aspect, it may also be possible that an outer surface of the flange portion of each of the plurality of mirror segments, outer surfaces of the first flange portion and the second flange portion of the vacuum chamber, and both surfaces of the connection flange are precision-machined to flat surfaces.

In the present aspect, it may also be possible that the plurality of mirror segments in the plurality of units form a surface of revolution made of an ellipsoid of revolution, a paraboloid of revolution, a hyperboloid of revolution, or a combination thereof.

In the present aspect, it may also be possible that each of the plurality of mirror segments has a metal multilayer film formed on an amorphous plating deposited on a metal member.

According to the present aspect, using the surface of the flange portion of each of the mirror segments as a reference plane, the plurality of mirror segments in an assembled state can be collectively machined (cut or polished) to allow a reduction in a manufacturing time.

A second aspect of the present invention is a method for manufacturing a neutron convergence device including a plurality of units configured by being connected in an axial direction, and a neutron supermirror having a predetermined surface of revolution shape, wherein each of the plurality of units includes: a plurality of mirror segments which are separate in a circumferential direction and each of which includes a mirror portion forming a portion of the neutron supermirror having the predetermined surface of revolution shape; a vacuum chamber for containing the plurality of mirror segments; and a connection flange for connecting the plurality of mirror segments and the vacuum chamber together, the manufacturing method including: a machining step of machining, in a state where the plurality of mirror segments corresponding to one of the units are assembled, a surface of a metal member included in each of the mirror segments such that the machined surface forms a portion of the predetermined surface of revolution shape; a film deposition step of forming a multilayer film supermirror on a surface of the mirror segment in a state where the plurality of mirror segments are placed on a flat surface; and an assembly step of attaching the plurality of mirror segments corresponding to one of the units and the vacuum chamber to the connection flange, and connecting the plurality of units together.

In the present aspect, it may also be possible that each of the plurality of mirror segments has a flange portion provided at one end thereof, and the machining step includes: a cutting step of cutting, in a state where an inner surface of the flange portion of each of the plurality of mirror segments corresponding to one of the units is attached to a first jig, a surface of the mirror segment; and a polishing step of polishing, in a state where an outer surface of the flange portion of each of the plurality of mirror segments corresponding to one of the units is attached to the connection flange or to a second jig, the surface of the mirror segment.

In the present aspect, it may also be possible that, in the cutting step, the outer surface of the flange portion is precision-machined to a flat surface.

In the present aspect, it may also be possible that the assembly step includes a step of attaching the plurality of mirror segments and the vacuum chamber to one surface of the connection flange.

In the present aspect, it may also be possible that the assembly step includes a step of attaching the vacuum chamber in a first unit to another surface of the connection flange in a second unit.

According to the present aspect, using the surface of the flange portion of each of the mirror segments as a reference plane, the plurality of mirror segments in an assembled state can be collectively machined (cut or polished) to allow a reduction in a manufacturing time.

### [Advantageous Effects of Invention]

According to the present invention, it is possible to mass-manufacture a neutron convergence device in a shorter time than conventionally

### [Brief Description of Drawings]

[Fig. 1]

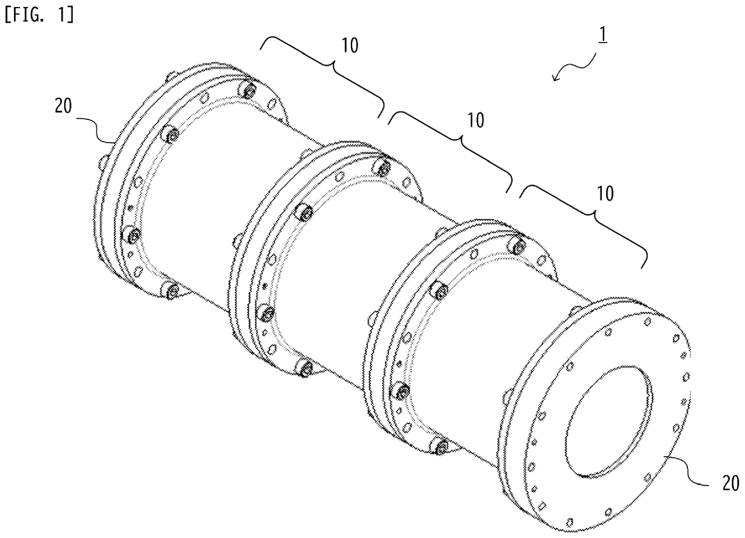

   Fig. 1 is a diagram illustrating a configuration of a neutron convergence device according to an embodiment.
[Fig. 2]

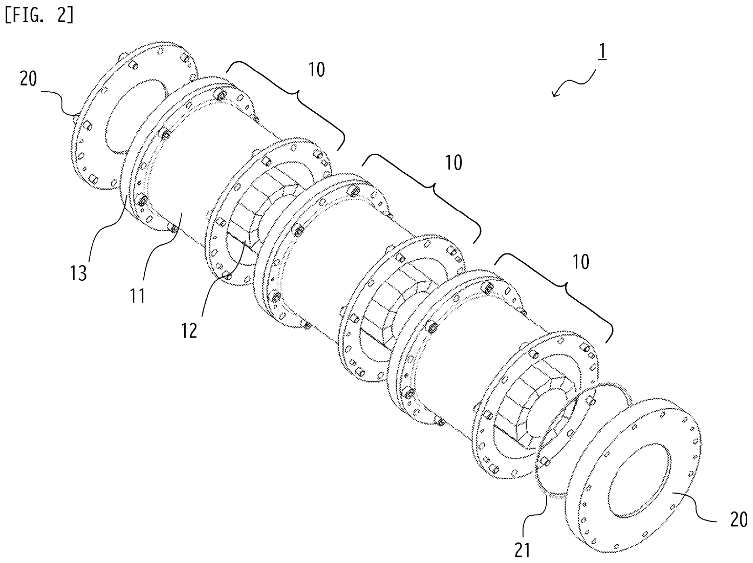

   Fig. 2 is a diagram illustrating the configuration of the neutron convergence device according to the embodiment.
[Fig. 3]

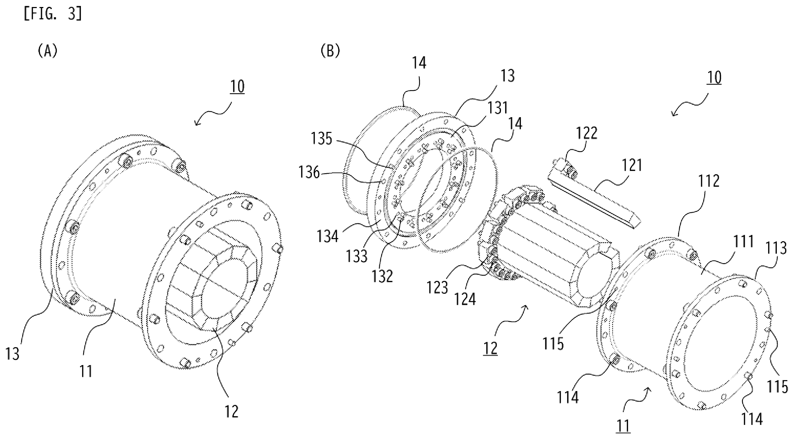

   Fig. 3 is a diagram illustrating the configuration of the neutron convergence device according to the embodiment.
[Fig. 4]

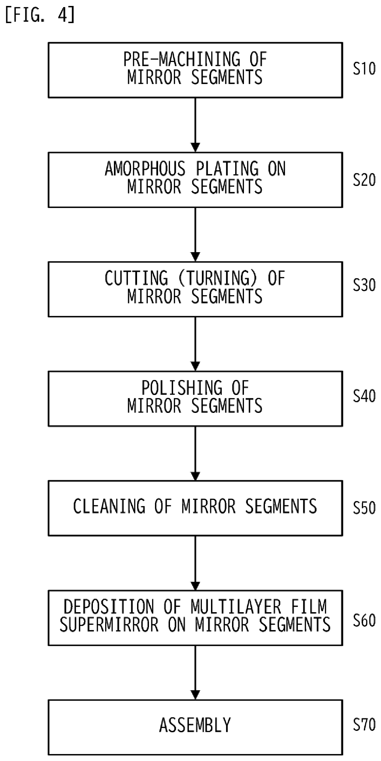

   Fig. 4 is a diagram illustrating a method for manufacturing the neutron convergence device according to the embodiment.
[Fig. 5]

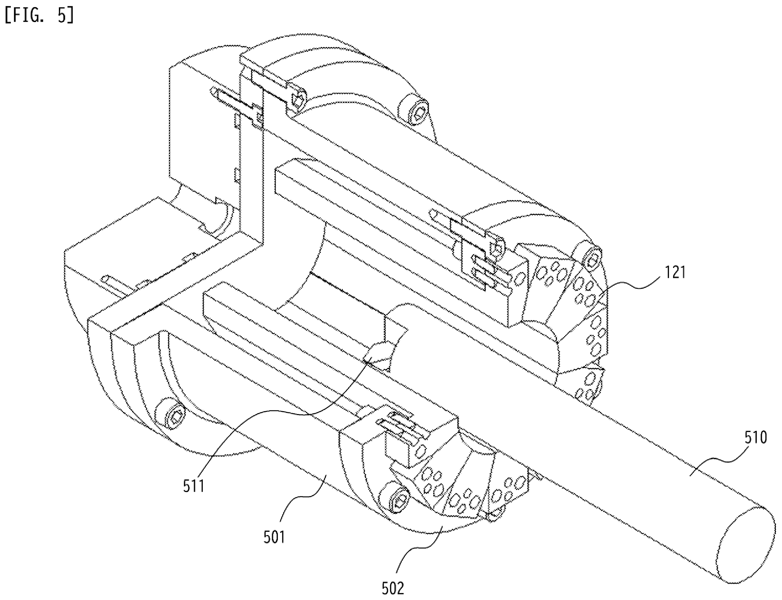

   Fig. 5 is a diagram illustrating a cutting step in the embodiment.
[Fig. 6]

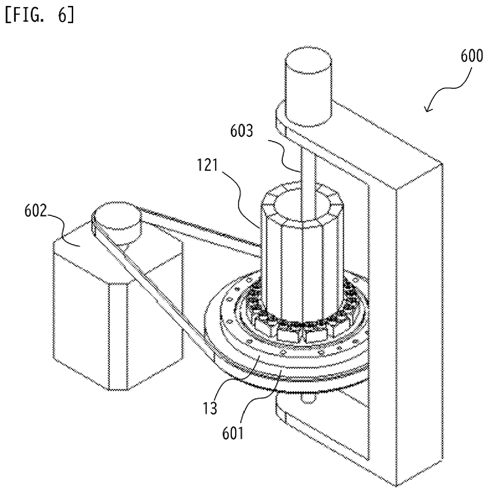

   Fig. 6 is a diagram illustrating a polishing step in the embodiment.

### [Description of Embodiments]

Referring to the drawings, the following will describe a mode for carrying out this invention, but the present invention is not limited thereto. Components in individual embodiments described below can appropriately be combined with each other.

### [Configuration of Neutron Convergence Device]

Referring to Fig. 1 to Fig. 3, a configuration of a neutron convergence device 1 according to the present embodiment will be described. Fig. 1 is a perspective view of the neutron convergence device 1 configured to include three units. Fig. 2 is an exploded view of the neutron convergence device 1 shown in Fig. 1. Fig. 3(A) is a perspective view of one of the units included in the neutron convergence device 1, and Fig. 3(B) is an exploded view of the unit.

The neutron convergence device 1 will be described as having a neutron supermirror having an ellipsoid of revolution shape, but the shape of the mirror is not limited to that of an ellipsoid of revolution, and may also be that of any surface of revolution. A surface of revolution is a curved surface obtained by rotating a curve in a space around a straight line in the space used as an axis, typical examples of which include an ellipsoid of revolution, a paraboloid of revolution, and a hyperboloid of revolution which are obtained by rotating an ellipsoid, a paraboloid, and a hyperboloid. A surface of revolution may also be a curved surface obtained by combining the ellipsoid of revolution, the surface of paraboloid, and the surface of hyperboloid with each other, and examples of which include a combination of the hyperboloid of revolution and the ellipsoid of revolution, a combination of the surface of hyperboloid and the surface of paraboloid, and the like. However, the mirror shape is not limited to such a typical surface of revolution, and may also be a surface of revolution obtained by rotating any curve. The neutron convergence device 1 has a structure in which a plurality of rotational ellipsoidal mirror units 10 (which may be hereinafter referred to simply as the units 10) that are separate in an axial direction are connected in the axial direction. A description will be given herein on the basis of an example in which the three units 10 are connected together, but the number of the units 10 is not particularly limited.

As shown in Fig. 1 and Fig. 2, the neutron convergence device 1 shown in the present embodiment is configured to include the three units 10 connected together. Each of the units 10 includes a vacuum chamber 11, and a mirror unit 12 configured to include a plurality of mirror segments 121 contained within the vacuum chamber 11. The plurality of mirror segments 121 and the vacuum chamber 11 are each connected to a connection flange 13 to be integrated as the unit. Each of the units 10 has substantially the same configuration except that the shape of the mirror surface of the internal mirror unit 12 differs.

The individual units 10 can be connected to each other. Specifically, the vacuum chamber 11 of one of the units is connected to the connection flange 13 of another of the units to connect the two units 10.

In addition, to the units 10 at end portions, lids 20 are attached to be able to internally evacuate the neutron convergence device 1. Note that, in the drawings, illustration of ports connecting vacuum pumps is omitted. Each of the lids 20 is configured of an aluminum plate having a thinner center portion, and the center portion serves as a window that transmits neutrons.

Referring to Fig. 3(A) and Fig. 3(B), a configuration of each of the units 10 will be described in greater detail. As described above, the unit 10 is generally configured to include the vacuum chamber 11, the mirror unit 12, and the precision connection flange 13.

The vacuum chamber 11 has a cylindrical portion 111, and a first flange portion 112 and a second flange portion 113 that are provided at both ends of the cylindrical portion 111. For example, the cylindrical portion 111 has an inner diameter of 120 mm and a length of 100 mm, but is not limited to such a size. The first flange portion 112 is used for connection to the connection flange 13 inside the same unit 10, while the second flange portion 113 is used for connection to the connection flange 13 inside the adjacent unit 10. For improved assembly precision, the outer surfaces of the first flange portion 112 and the second flange portion 113 have been precision-machined to flat surfaces. The first flange portion 112 is provided with fastening portions 114 for connection to the connection flange 13 and with positioning members 115 for positioning with the connection flange 13. For example, the fastening portions 114 are screw holes and screws, while the positioning members 115 are positioning holes or positioning pins. The second flange portion 113 is also provided with the fastening portions 114 and the positioning members 115, similarly to the first flange portion 112. In the present embodiment, each of the first flange portion 112 and the second flange portion 113 is provided with the twelve screw holes, of which every other six screw holes are used for the connection to the connection flange 13. In addition, each of the first flange portion 112 and the second flange portion 113 is provided with the four positioning holes, of which every other two positioning holes are used for the positioning with the connection flange 13.

The mirror unit 12 is configured to include the plurality of mirror segments 121, having a cylindrical shape having a flange provided at one of the end portions thereof, and has an inner surface serving as the neutron supermirror having an ellipsoid of revolution surface. In the present embodiment, the mirror unit 12 is configured to include the twelve mirror segments 121 that are separate in a circumferential direction. However, the number of the separate mirror segments 121 is not limited thereto, and may be either larger or smaller.

The mirror segments 121 are made of, e.g., an aluminum alloy (e.g., A5052 obtained by adding magnesium to aluminum) coated with nickel-phosphorus (Ni-P) plating as amorphous plating, and has a multilayer film in which nickel and titanium are alternately laminated. The multilayer film is provided such that a layer thickness therein is larger with distance from the substrate, thereby increasing a critical angle for total internal reflection. This multilayer film corresponds to a mirror portion that reflects/converges neutrons.

At one end portion of each of the mirror segments 121, a flange portion 122 is provided. The flange portion 122 is provided with a positioning portion 123 for positioning with the connection flange 13 and with a fastening portion 124 for connection with the connection flange 13. In the present embodiment, the positioning portion 123 includes precision holes for insertion of two positioning pins 132, but the positioning portion 123 may also be a positioning pin, and more than the two precision holes or more than the two positioning pins may also be provided. The fastening portion 124 includes, e.g., a screw hole and a screw and, in the present embodiment, the two screw holes and the two screws are provided. Here, the outer surface of the flange portion 122 serves as a reference plane for attachment to the connection flange 13, and is precision-machined to a flat surface. The inner surface of the flange portion 122 is also machined with high precision so as to serve as a reference plane for attachment to a jig during cutting. The precision of precision surface machining is, e.g., in a millimeter order or a sub-millimeter order.

The connection flange 13 includes, in one surface thereof, a first region 131 for attaching the plurality of mirror segments 121 and a second region 134 for attaching the vacuum chamber 11. The first region 131 is the inner region (center region) of the connection flange 13, while the second region 134 is the outer region (outer circumferential region) of the connection flange 13. The first region 131 includes the positioning pins 132 for positioning the mirror segments 121 and screw holes 133 for fastening the mirror segments 121. The plurality of screw holes 133 are concentrically provided within the first region 131. For each one of the mirror segments, the two positioning pins 132 and the two screw holes 133 are provided, which are provided at twelve positions to correspond to the total of twelve mirror segments. In the second region 134, positioning pins 135 and screw holes 136, which are for positioning the vacuum chamber 11, are provided. The plurality of screw holes 136 are provided concentrically outside the circle in which the plurality of screw holes 133 are provided. The screw holes 136 are used also to attach the vacuum chamber 11 to another unit. Additionally, between the first region 131 and the second region 134, an annular groove is provided, and an O-ring 14 is placed therein. In the present disclosure, the first region 131 corresponds to a first attachment portion, the second region 134 corresponds to a second attachment portion and, of the surface opposite to the surface formed with the first region and the second region, a region corresponding to the second region 134 corresponds to a third attachment portion.

Here, the both surfaces of the connection flange 13 serve as the reference planes for the positioning, and therefore the both surfaces are machined to precision flat surfaces.

### [Method for Manufacturing Neutron Convergence Device]

Fig. 4 is a diagram illustrating a flow of a method for manufacturing the neutron convergence device 1 in the present embodiment.

Step S10 is pre-machining processing for the mirror segments 121. An aluminum alloy (e.g., A5052) is machined into an approximate shape of the mirror segments 121. At this time, the mirror segments 121 corresponding to one unit, i.e., the twelve mirror segments 121 are simultaneously prepared.

In Step S20, on the pre-machined mirror segments 121, electroless plating is performed to deposit a nickel-phosphorus plating to a thickness of about 100 µm on an aluminum alloy.

Step S30 is cutting (turning) processing for the mirror segments 121. In the cutting, in a state where the mirror segments 121 corresponding to one unit are assembled in a cylindrical shape, the surface to be provided with a supermirror metal multilayer film is simultaneously cut along the entire circumference.

Fig. 5 is a diagram illustrating the cutting. The twelve mirror segments 121 corresponding to one unit are attached to a high-precision jig 501 for fixing the mirror segments 121 to the spindle of a lathe. The precision jig 501 has a substantially cylindrical shape, and a has an attachment surface 502 for the mirror segments at an end portion thereof. The attachment surface 502 is provided with positioning pins and fastening portions, and the mirror segments 121 are attached with high precision. Here, the inner surfaces of the flange portions 122 of the mirror segments 121 are attached to the attachment surface 502. Thus, in a state where the mirror segments 121 corresponding to one unit are assembled, by using a boring tool 510 having a diamond tool 511 provided on the tip thereof, the inner surfaces of the mirror segments 121 are subjected to precision turning so as to form portions of a predetermined surface of revolution shape. In addition, the exposed outer surfaces of the flange portions 122 of the mirror segments 121 are also simultaneously precision-machined to flat surfaces. Since the outer surfaces of the flange portions 122 serve as attachment surfaces, high-precision machining is important.

Step S40 is polishing processing for the mirror segments 121. In the polishing, in the state where the mirror segments 121 corresponding to one unit are assembled in the cylindrical shape, the surfaces to be provided with the supermirror metal multilayer film are simultaneously polished.

Fig. 6 is a diagram illustrating the polishing. When the mirror segments 121 are to be polished with a polishing device 600, the twelve mirror segments 121 corresponding to one unit are connected to the connection flange 13 to be brought into the cylindrically assembled state. Specifically, the outer surfaces of the flange portions 122 machined with high precision in the cutting are attached to the connection flange 13. Note that the mirror segments 121 may also be attached to a polishing jig, not to the connection flange 13. The mirror segments 121 and the connection flange 13 are placed on a rotary table 601 and, while the rotary table 601 is rotated at a low speed with a motor 602, the inner surfaces of the mirror segments 121 are polished with a polishing tool 603 rotated at a high speed to form portions of the predetermined surface of revolution shape. As long as the inner surfaces of the mirror segments 121 were machined with such a precision as to provide a surface roughness of 2 nm (rms) in the cutting, by using a colloidal silica abrasive, the inner surfaces of the mirror segments 121 can be polished to have a surface roughness of about 0.2 nm (rms). In a case where the surface roughness in the cutting is over 2 nm (rms), when polishing is performed using an alumina abrasive to provide a surface roughness of 2 nm (rms), and then polishing using the colloidal silica is performed, the inner surfaces of the mirror segments 121 can be polished to have a surface roughness of about 0.2 nm (rms).

In Step S50, the mirror segments 121 after being polished are cleaned. The cleaning is performed simultaneously on the mirror segments 121 corresponding to one unit in the state where the mirror segments corresponding to one unit are assembled. The cleaning is, e.g., scrub cleaning using PVA (polyvinyl alcohol) sponge.

In Step S60, the multilayer film supermirror (mirror portion) is deposited on the inner surface of the mirror segments 121 (see PTL 1). After the cleaning, the mirror segments 121 are removed from the connection flange 13, at least the mirror segments 121 corresponding to one unit are placed on a flat plate, and a nickel-titanium supermirror multilayer film is deposited on the surfaces thereof by ion beam sputtering. By performing simultaneous film deposition processing on the mirror segments 121 corresponding to one unit, it is possible to perform film deposition under the same conditions. Note that the mirror segments 121 are not limited to one unit, and it may also be possible to perform simultaneous film deposition on the mirror segments 121 corresponding to a plurality of units. In addition, by using such a small-size deposition device as to be capable of performing simultaneous film deposition processing on the mirror segments 121 corresponding to one unit, it is possible to further uniformize deposition conditions for each of the mirror segments 121. Note that, as long as it is possible to ensure the uniformity of the deposition conditions or tolerate an error in the deposition conditions, it may also be possible to divide the mirror segments 121 corresponding to one unit into several groups, and perform film deposition processing for each of the groups.

In Step S70, the mirror segments 121 after the completion of the supermirror film deposition are assembled together with the connection flange 13 and the vacuum chamber 11 to form one rotational ellipsoidal mirror unit 10. Specifically, to the first region 131 in one surface of the connection flange 13, the flange portions 122 of the mirror segments 121 are attached by using the positioning pins 132 and the screw holes 133. In addition, to the second region 134 in the same surface of the connection flange 13, the first flange portion 112 of the vacuum chamber 11 is attached by using the positioning pins 135 and the screw holes 136. Then, the plurality of units 10 are connected to each other, and the lids 20 are attached to openings in the both ends to complete the neutron convergence device 1. The connection of the two units 10 is performed by attaching the second flange portion 113 of the vacuum chamber 11 in one of the units to the connection flange 13 in another of the units by using the positioning pins 135 and the screw holes 136.

### [Advantageous Effects of Present Embodiment]

In the present embodiment, simultaneous cutting (turning) is performed on the mirror segments 121 corresponding to one unit in an assembled state, which are separate in the circumferential direction and arranged along the entire circumference. By the cutting, the mirror segments 121 corresponding to one unit are machined into a precise rotationally symmetric shape having a single axis of rotational symmetry by one machining. In addition, not only the cutting, but also the polishing and cleaning are also simultaneously performed on the mirror segments corresponding to one unit, which are arranged along the entire circumference. Since simultaneous machining is thus performed in the state where the mirror segments are assembled, the present technology is superior to the conventional technology in terms of both machining precision and speed.

Moreover, defining the mirror segments for the entire circumference of one axial division as one unit, the mirror segments 121 belonging to one unit are positioned with respect to the connection flange 13 and the vacuum chamber 11. Therefore, by preparing a plurality of such units and connecting the units together, it is possible to easily expand the rotationally symmetrical shapes in the axial direction. For example, by manufacturing a neutron convergence device by connecting several units first, and then further adding units each manufactured by additionally producing mirror segments, the expansion in the axial direction is possible.

Furthermore, by performing simultaneous film deposition on the mirror segments corresponding to one or a plurality of units that have been disassembled and arranged in a film deposition device such as an ion beam sputter device, the neutron supermirror for the entire circumference can be obtained by one film deposition process.

### [Reference Signs List]

- 1: Neutron convergence device
- 10: Rotational ellipsoidal mirror unit
- 11: Vacuum chamber
- 12: Mirror unit
- 13: Connection flange

## Claims

1. A neutron convergence device comprising:
a plurality of units configured by being connected in an axial direction; and
a neutron supermirror having a predetermined surface of revolution shape,
wherein each of the plurality of units includes:
a plurality of mirror segments which are separate in a circumferential direction and each of which includes a mirror portion forming a portion of the neutron supermirror having the predetermined surface of revolution shape;
a vacuum chamber for containing the plurality of mirror segments; and
a connection flange to which the plurality of mirror segments and the vacuum chamber are to be attached,
wherein each of the plurality of mirror segments has a flange portion provided at one end thereof,
wherein the vacuum chamber has a first flange portion provided at one end thereof and a second flange portion provided at another end thereof, and
wherein the connection flange has a first attachment portion provided to attach the flange portion of each of the plurality of mirror segments in the same unit as that of the connection flange and a second attachment portion located on an outer periphery of the first attachment portion and provided to attach the first flange portion of the vacuum chamber in the same unit as that of the connection flange.

2. The neutron convergence device according to claim 1,
wherein the connection flange has a third attachment portion provided to attach the second flange portion of the vacuum chamber in the unit different from that of the connection flange.

3. The neutron convergence device according to claim 1,
wherein an outer surface of the flange portion of each of the plurality of mirror segments, outer surfaces of the first flange portion and the second flange portion of the vacuum chamber, and both surfaces of the connection flange are precision-machined to flat surfaces.

4. The neutron convergence device according to claim 1,
wherein the plurality of mirror segments in the plurality of units form a surface of revolution made of an ellipsoid of revolution, a paraboloid of revolution, a hyperboloid of revolution, or a combination thereof.

5. The neutron convergence device according to claim 1,
wherein each of the plurality of mirror segments has a metal multilayer film formed on an amorphous plating deposited on a metal member.

6. A method for manufacturing a neutron convergence device including a plurality of units configured by being connected in an axial direction, and a neutron supermirror having a predetermined surface of revolution shape,
wherein each of the plurality of units includes:
a plurality of mirror segments which are separate in a circumferential direction and each of which includes a mirror portion forming a portion of the neutron supermirror having the predetermined surface of revolution shape;
a vacuum chamber for containing the plurality of mirror segments; and
a connection flange for connecting the plurality of mirror segments and the vacuum chamber together,
the manufacturing method comprising:
a machining step of machining, in a state where the plurality of mirror segments corresponding to one of the units are assembled, a surface of a metal member included in each of the mirror segments such that the machined surface forms a portion of the predetermined surface of revolution shape;
a film deposition step of forming a multilayer film supermirror on a surface of the mirror segment in a state where the plurality of mirror segments are placed on a flat surface; and
an assembly step of attaching the plurality of mirror segments corresponding to one of the units and the vacuum chamber to the connection flange, and connecting the plurality of units together.

7. The method for manufacturing the neutron convergence device according to claim 6,
wherein each of the plurality of mirror segments has a flange portion provided at one end thereof, and
wherein the machining step includes:
a cutting step of cutting a surface of the mirror segment, in a state where an inner surface of the flange portion of each of the plurality of mirror segments corresponding to one of the units is attached to a first jig; and
a polishing step of polishing the surface of the mirror segment, in a state where an outer surface of the flange portion of each of the plurality of mirror segments corresponding to one of the units is attached to the connection flange or to a second jig.

8. The method for manufacturing the neutron convergence device according to claim 7,
wherein, in the cutting step, the outer surface of the flange portion is precision-machined to a flat surface.

9. The method for manufacturing the neutron convergence device according to claim 6,
wherein the assembly step includes a step of attaching the plurality of mirror segments and the vacuum chamber to one surface of the connection flange.

10. The method for manufacturing the neutron convergence device according to claim 9,
wherein the assembly step includes a step of attaching the vacuum chamber in a first unit to another surface of the connection flange in a second unit.
